# EUROPEAN PATENT SPECIFICATION

(11) **EP 0 478 543 B1**
(45) Date of publication and mention of the grant of the patent: **05.04.1995**
(21) Application number: 89908351.3
(22) Date of filing: 12.05.1989
(51) Int. Cl.: B29C 44/22, F16K 11/06

(54) **FLASH EXTRUSION VALVE AND PROCESS FOR USING IT**
SPÜLVENTIL UND DESSEN VERWENDUNG BEIM STRANGPRESSEN
SOUPAPE D'EXTRUSION RAPIDE ET SON PROCEDE D'UTILISATION

(43) Date of publication of application: 08.04.1992
(73) Proprietor: E.I. DU PONT DE NEMOURS AND COMPANY, Wilmington Delaware 19898 (US)
(72) Inventor: DEMPSEY, James, J., Richmond, VA 23206 (US)
(74) Representative: Jones, Alan John
(86) International application number: US8901987
(87) International publication number: WO9013412

(56) References cited:
- US-A- 3 227 784
- US-A- 3 461 193
- US-A- 3 504 076
- US-A- 3 756 276
- US-A- 4 436 108
- US-A- 4 466 458
- US-A- 4 469 130
- US-A- 4 721 391
- US-A- 4 739 790
- US-A- 4 816 083

## Description

### BACKGROUND OF THE INVENTION

The present invention relates to an improved valve for utilizing an inert gas or optionally a liquid solvent at start up and shutdown of a flash extrusion process which utilizes a polymer and solvent at an elevated temperature and pressure to produce foams, sponges, plexifilament strands, etc.

### PRIOR ART

U.S. 3,227,784 discloses a process for producing molecularly oriented microcellular or plexifilamentary products by extrusion of a polymer solution.

U.S. 3,461,193 discloses a start up procedure and valve arrangement for flash-extrusion of solutions of a polymer. The procedure involves pressuring the extrusion apparatus downstream from the polymer solution control valve with an inert gas to prevent premature flashing of the solvent and consequent solidification of the polymer.

### SUMMARY OF THE INVENTION

The present invention relates to a combination valve and process for utilizing such valve in flash extrusion of polymer-liquid mixtures or polymer solutions. As used herein flash extrusion means a process wherein solvent immediately flashes when a solvent-polymer mixture or polymer solution passes through a restricting orifice or series of orifices to form a foam, sponge or fibrous structure. Typical of processes that can be benefitted by the present invention is the process disclosed by Blades and White in U.S. 3,227,784, however, the present valve and process of the present invention is beneficial for any flash extrusion process as well as other polymer extrusion process requiring valve or equipment to be flushed immediately upon shutdown. The apparatus of the present invention (combination valve) yields consistent repeatable start up of flash extrusion processes. In addition, this apparatus provides the means of shutting down the flash extrusion process with a minimum of polymer residue in valve and flash extrusion hardware by allowing the injection of inert gas or solvent close to the process valve prior to allowing pressure to fall to a level that allows polymer to solidify in the downstream hardware. This short flush at the time the process valve is closed makes clean up and restart of the flash extrusion hardware easier.

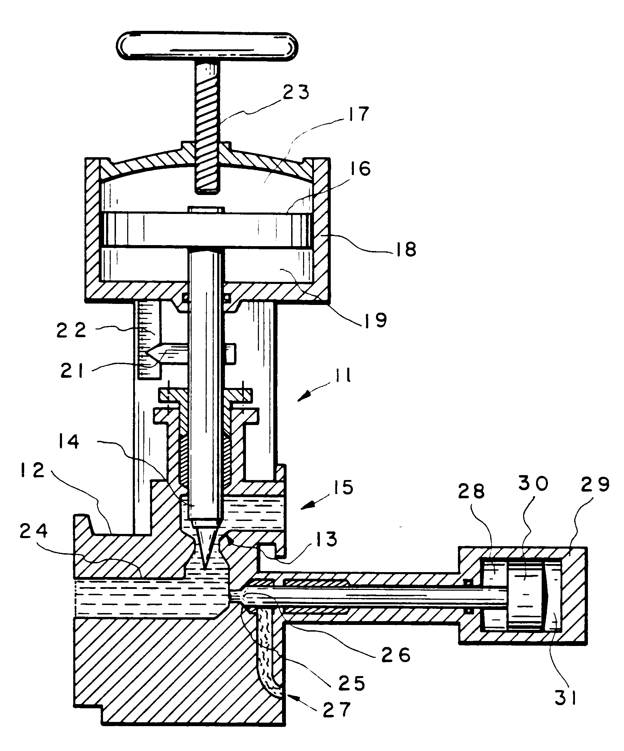

### BRIEF DESCRIPTION OF THE DRAWING

The drawing is a cross-section of the combination valve forming part of the present invention which valve is used in the process of the present invention.

### DETAILED DESCRIPTION OF THE DRAWING

Referring now to the drawing, the combination valve of the present invention is depicted generally at 11. Combination valve 11 contains two valves contained in one valve body 12. The first valve is a process fluid valve fitted with valve seat 13 which cooperates with linearly actuated valve stem 14 to provide off-on control of the process fluid (polymer-solvent mixture or polymer solution) in process fluid feed stream 15. Valve stem 14 is connected to piston 16 actuated automatically by being urged toward the closed position by air pressure in chamber 17, defined by air pressure cylinder 18 and piston 16, or by being urged toward the open position by air pressure in chamber 19 defined by air pressure cylinder 18 and piston 16. The position of valve stem 14 can be visually determined by the position of indicator 21 on scale 22. Valve stem 14 can be manually locked in the closed but not open position or its maximum opening preset by means of manual control means 23. Process fluid channel 24 makes a substantially right angle bend just downstream from valve seat 13. At the right angle bend in process fluid channel 24 combination valve 11 is fitted with prime-flush valve seat 25. Valve seat 25 in cooperation with linearly actuated valve stem 26 opens and closes communication between solvent or gas channel 27 and process fluid channel 24. Valve stem 26 is urged toward the open position by means of air or nitrogen pressure in chamber 28, defined by air pressure cylinder 29 and piston 30 or urged toward the closed position by air pressure in chamber 31 defined by air pressure cylinder 29 and piston 30.

### DETAILED DESCRIPTION

The "Combination Valve" as disclosed herein consists of two valves in one valve body. One valve (Process Valve) serves as on-off control of the process fluid in addition to controlling the pressure of process fluid. The second valve (Prime-Flush) serves as on-off control for an inert gas or solvent that is utilized when starting and shutting down flash extrusion process. Valve body has steam passages (not shown in the drawing) for maintaining the valve at process temperature.

The Process Valve has an air operated actuator that permits remote and automatic operation. Valve stem and seat are designed to provide pressure control based on signal from pressure transducer located upstream from the extrusion orifice. Pressure signal is supplied to a valve positioner mounted on the valve body. Pressure at the extrusion point is a critical process parameter.

The Prime-Flush Valve allows for the injection of an inert gas or solvent downstream of the Process Valve to permit raising the pressure between the Process Valve and the extrusion point to a level that prevents polymer separating and fouling the hardware when the process is started by opening the Process Valve. The Prime-Flush Valve is located close to the Process Valve to allow polymer to be flushed from the valve when necessary to shut off polymer flow; flush must take place prior to pressure falling to the point that solvent flashes and polymer solidifies in valve and flash extrusion hardware. The minimum pressure to obtain a satisfactory flush with a minimum amount of inert gas or solvent is a function of the polymer, solvent, concentration, and temperature. The inert gas or solvent valve is designed with an actuating cylinder so that it can be operated remotely and sequenced automatically.

An inert gas is preferred to solvent for priming the flash extrusion hardware because: 1. It has a low heat capacity and it can be used unheated with no significant impact on process hardware temperature. 2. It does not mix with and dilute the solution causing the initial flash extrusion product to be very poor quality. However, priming using solvent has been done successfully. Solvent does a better job of flushing hardware at time of shutdown than an inert gas but the inert gas does a satisfactory job and avoids the need for supplying both inert gas and solvent to this valve.

Automatic sequencing of the two actuators of the "Combination Valve" is desirable but not required. Automation simplifies operator tasks and allows starting and stopping polymer flow with the minimum amount of inert gas or solvent. The preferred sequence for operation of the "Combination Valve" is: Process Start Up
1. Operator initiates automatic start up sequence
2. Prime-Flush valve opens to inert gas source that is at a pressure slightly higher than the process supply pressure.
3. Process valve opens as soon as pressure downstream of valve exceeds normal operating pressure. Prime-Flush valve closes rapidly at time Process Valve is opened.
4. Process Valve is placed in automatic control.

### Process Shut Down

1. Operator or on line sensor initiates automatic shutdown sequence.
2. Process Valve closes and Prime-Flush valve opens rapidly at the same time so that flush proceeds without a loss in pressure.
3. Timer starts when Prime-Flush valve opens.
4. Flush Valve closes after a pre-set time (1-100 seconds).

## Claims

1. A process of starting up and shutting down a flash extrusion process wherein a flash extrusion process fluid source stream (15) is being transported at a selected operating pressure through a flow line (24) towards an extrusion point, the startup portion of the process comprising the steps of:
(a) opening a prime-flush valve (26) located along the flow line (24) and between the extrusion point and an upstream process fluid valve (14) to allow an inert gas at a pressure higher than that of the process fluid source stream (15) to enter the flow line (24);
(b) opening the upstream process fluid valve (14) when the downstream pressure in the flow line exceeds the operating pressure of the process fluid source stream (15); and
(c) simultaneously closing the prime-flush valve (26) as the process fluid valve (14) is opened; and the shutdown portion of the process comprising the steps of:
(d) closing the process fluid valve (14) while simultaneously opening the prime-flush valve (26) to again allow the inert gas at a pressure higher than that of the process fluid source stream (15) to enter the flow line (24); and
(e) closing the prime-flush valve (26) after a predetermined time.

2. A process of starting up and shutting down a flash extrusion process wherein a flash extrusion process fluid source stream (15) comprising a polymer and a polymer solvent is being transported at a selected operating pressure through a flow line (24) towards an extrusion point, the startup portion of the process comprising the steps of:
(a) opening a prime-flush valve (26) located along the flow line (24) and between the extrusion point and an upstream process fluid valve (14) to allow a flush solvent at a pressure sufficient to prevent the polymer solvent from flashing to enter the flow line (24);
(b) opening the upstream process fluid valve (14) when the downstream pressure in the flow line (24) is sufficient to prevent the polymer solvent from flashing; and
(c) simultaneously closing the prime-flush valve (26) as the process fluid valve (14) is opened; and the shutdown portion of the process comprising the steps of:
(d) closing the process fluid valve (14) while simultaneously opening the prime-flush valve (26) to again allow the flush solvent at a pressure sufficient to prevent the polymer solvent from flashing to enter the flow line (24); and
(e) closing the prime-flush valve (26) after a predetermined time.

## Patentansprüche

1. Verfahren zum Einleiten und Beenden eines Entspannungsextrusionsprozesses, bei dem ein Entspannungsextrusionsprozeßfluidquellenstrom (15) bei einem gewählten Arbeitsdruck durch eine Strömungsleitung (24) zu einem Extrusionsort gefördert wird,
wobei der Einleitungsteil des Verfahrens folgende Schritte umfaßt:
(a) Öffnen eines Vorbereitungs- bzw. Spülventils (26), das an der Strömungsleitung (24) sowie zwischen dem Extrusionsort und einem stromauf gelegenen Prozeßfluidventil angeordnet ist, um ein Eindringen eines Inertgases in die Strömungsleitung (24) bei einem Druck zu ermöglichen, der höher als derjenige des Prozeßfluidquellenstroms (15) ist,
(b) Öffnen des stromauf gelegenen Prozeßfluidventils (14), wenn der stromab herrschende Druck in der Strömungsleitung den Arbeitsdruck des Prozeßfluidquellenstroms (15) übersteigt, und
(c) gleichzeitiges Schließen des Vorbereitungs- bzw. Spülventils (26), wenn das Prozeßfluidventil (16) geöffnet wird, und
wobei der Beendigungsteil des Verfahrens folgende Schritte umfaßt:
(d) Schließen des Prozeßfluidventils (14) bei gleichzeitigem Öffnen des Vorbereitungs- bzw. Spülventils (26), um erneut ein Eindringen des Inertgases in die Strömungsleitung (24) bei einem Druck zu ermöglichen, der höher als der jenige des Prozeßfluidquellenstroms (15) ist, und
(e) Schließen des Vorbereitungs- bzw. Spülventils (26) nach einer vorgegebenen Zeit.

2. Verfahren zum Einleiten und Beenden eines Entspannungsextrusionsprozesses, wobei ein Entspannungsextrusionsprozeßfluidquellenstrom (15), der ein Polymer und ein Polymerlösungsmittel enthält, bei einem gewählten Arbeitsdruck durch eine Strömungsleitung (24) zu einem Extrusionsort gefördert wird,
wobei der Einleitungsteil des Verfahrens folgende Schritte umfaßt:
(a) Öffnen eines Vorbereitungs- bzw. Spülventils (26), das an der Strömungsleitung (24) sowie zwischen dem Extrusionsort und einem stromauf gelegenen Prozeßfluidventil (14) angeordnet ist, um ein Eindringen eines Spüllösungsmittels in die Stömungsleitung (24) bei einem Druck zu ermöglichen, der ausreicht, das Polymerlösungsmittel am Entspannen zu hindern,
(b) Öffnen des stromauf gelegenen Prozeßfluidventils (14), wenn der stromab herrschende Druck in der Strömungsleitung (24) ausreicht, das Polymerlösungsmittel am Entspannen zu hindern, und
(c) gleichzeitiges Schließen des Vorbereitungs- bzw. Spülventils (26), wenn das Prozeßfluidventil (14) geöffnet wird, und
wobei der Beendigungsteil des Verfahrens folgende Schritte umfaßt:
(d) Schließen des Prozeßfluidventils (14) bei gleichzeitigem Öffnen des Vorbereitungs- bzw. Spülventils (26), um erneut ein Eindringen des Spüllösungsmittels in die Strömungsleitung (24) bei einem Druck zu ermöglichen, der ausreicht, das Polymerlösungsmittel am Entspannen zu hindern, und
(e) Schließen des Vorbereitungs- bzw. Spülventils (26) nach einer vorgegebenen Zeit.

## Revendications

1. Un procédé de démarrage et d'interruption d'un processus d'extrusion rapide, dans lequel un courant de source de fluide d'extrusion rapide (15) est transporté à une pression de fonctionnement choisie via un circuit d'écoulement (24) vers un point d'extrusion, la partie de démarrage du procédé comprenant les étapes consistant:
a) à ouvrir une valve de premier écoulement (26) disposée sur la ligne d'écoulement (24) et entre le point d'extrusion et une valve de fluide de procédé amont (14) afin de permettre à un gaz inerte à une pression supérieure à celle du courant de source de fluide de procédé (15) d'entrer dans le circuit d'écoulement (24);
b) à ouvrir la valve de fluide de procédé amont (14) lorsque la pression aval dans le circuit d'écoulement dépasse la pression de fonctionnement de courant de source de fluide de procédé (15); et
c) à fermer simultanément la valve de premier écoulement (26) lorsque la valve de fluide de procédé (14) est ouverte; et la partie d'obturation du procédé comprenant les étapes consistant:
d) à fermer la valve de fluide de procédé (14) tout en ouvrant simultanément la valve de premier écoulement (26) afin de permettre à nouveau au gaz inerte à une pression supérieure à celle du courant de source de fluide de procédé (15) d'entrer dans le circuit d'écoulement (24); et
e) à fermer la valve de premier écoulement (26) après une durée prédéterminée.

2. un procédé de démarrage et d'arrêt d'un processus d'extrusion rapide, dans lequel un courant de source de fluide de processus d'extrusion rapide (15) comprenant un polymère et un solvant de polymère est transporté à une pression de fonctionnement choisie via un circuit d'écoulement (24) vers un point d'extrusion, la partie de démarrage du procédé comprenant les étapes consistant:
a) à ouvrir une valve de premier écoulement (26) disposée sur le circuit d'écoulement (24) et entre le point d'extrusion et une valve amont de fluide de procédé (14) afin de permettre à un solvant rapide d'atteindre une pression suffisante pour empêcher le solvant de polymère de se vaporiser instantanément pour pénétrer dans le circuit d'écoulement (24);
b) à ouvrir la valve amont de fluide de procédé (14) lorsque la pression aval dans le circuit d'écoulement (24) est suffisante pour empêcher le solvant de polymère de se vaporiser instantanément; et
c) à fermer simultanément la valve de premier écoulement (26) lorsque la valve de fluide de procédé (14) est ouverte; et la partie d'interruption du procédé comprenant les étapes consistant:
d) à fermer la valve de fluide de procédé (14) tout en ouvrant simultanément la valve de premier écoulement (26) afin de permettre à nouveau au solvant rapide d'atteindre une pression suffisante pour empêcher le solvant de polymère de se vaporiser instantanément pour entrer dans le circuit d'écoulement (24);
e) à fermer la valve de premier écoulement (26) après une durée prédéterminée.
